# EUROPÄISCHE PATENTSCHRIFT

(11) **EP 2 119 050 B1**
(45) Veröffentlichungstag und Bekanntmachung des Hinweises auf die Patenterteilung: **22.12.2010**
(21) Anmeldenummer: 08708308.5
(22) Anmeldetag: 29.01.2008
(51) Int. Cl.: H04W 56/00

(54) **VERFAHREN ZUR STEUERUNG DER SYNCHRONISATION IN EINEM SICH AUF MINDESTENS EINE ZELLE ERSTRECKENDEN KOMMUNIKATIONSSYSTEM ZUR DRAHTLOSEN KOMMUNIKATION MIT SYNCHRONISIERT ZU EINER BASISSTATION ZELLENBESCHRÄNKTER UND/ODER -ÜBERGREIFENDER, DRAHTLOSER DIREKT-KOMMUNIKATIONSMÖGLICHKEIT ZWISCHEN MOBILTEILEN**
METHOD FOR CONTROLLING THE SYNCHRONIZATION IN A COMMUNICATION SYSTEM COVERING AT LEAST ONE CELL FOR WIRELESS COMMUNICATION WITH A LINE-LIMITED OR ACROSS-LINE WIRELESS DIRECT COMMUNICATION POSSIBILITY BETWEEN MOBILE PARTS THAT IS SYNCHRONIZED WITH A BASE STATION
PROCÉDÉ DE CONTRÔLE DE LA SYNCHRONISATION DANS UN SYSTÈME DE COMMUNICATION S'ÉTENDANT SUR AU MOINS UNE CELLULE POUR COMMUNIQUER SANS FIL, AVEC POSSIBILITÉ DE COMMUNICATION SANS FIL ET DIRECTE ENTRE DES ÉLÉMENTS MOBILES, DE MANIÈRE SYNCHRONISÉE AVEC UNE STATION DE BASE, LIMIT&

(30) Priorität: 01.02.2007 EP 07002213
(43) Veröffentlichungstag der Anmeldung: 18.11.2009
(73) Patentinhaber: Gigaset Communications GmbH, 81379 München (DE)
(72) Erfinder: HÜLDER, Stefan, 46286 Dorsten-Deuten (DE); KEHREN, Dieter, 46539 Dinslaken (DE); LENFORT, Christoph, 46399 Bocholt (DE)
(74) Vertreter: Michalski Hüttermann & Partner Patentanwälte
(86) Internationale Anmeldenummer: PCT/EP2008/050990
(87) Internationale Veröffentlichungsnummer: WO 2008/092834

(56) Entgegenhaltungen:
- EP-A- 0 777 344
- WO-A-2007/003616
- DE-A1- 19 903 018

## Beschreibung

Verfahren zur Steuerung der Synchronisation in einem sich auf mindestens eine Zelle erstreckenden Kommunikationssystem zur drahtlosen Kommunikation mit synchronisiert zu einer Basisstation zellenbeschränkter und/oder -übergreifender, drahtloser Direkt-Kommunikationsmöglichkeit zwischen Mobilteilen

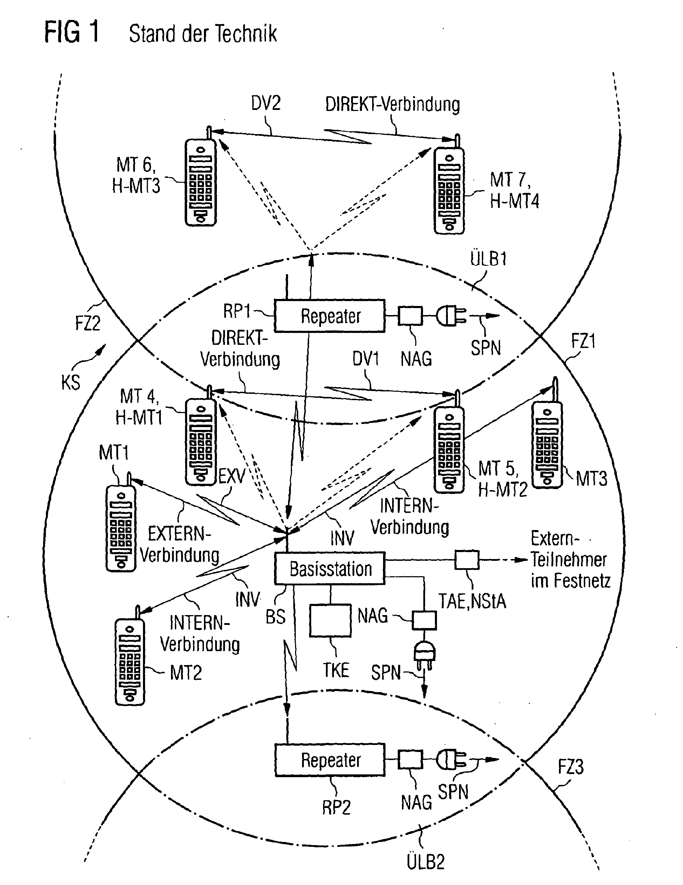

Wie das Verfahren zur Steuerung der Synchronisation in einem sich auf mindestens eine Zelle erstreckenden Kommunikationssystem zur drahtlosen Kommunikation, vorzugsweise ein DECT-System (**D**igital **E**nhanced **C**ordless **T**elecommunication), mit synchronisiert zu einer Basisstation zellenbeschränkter und/- oder -übergreifender, drahtloser Direkt-Kommunikationsmöglichkeit (**D**ECT **D**istributed **C**ommunication, DDC) zwischen Mobilteilen gemäß dem Stand der Technik funktioniert, ist in den FIGUREN 1 bis 4 dargestellt. Dabei wird unter Bezugnahme auf die relevanten Kapitel des DECT-Standards ETSI-Publikation EN 300 175-1...8, November 2004 in die Thematik "Distributed Communication nach dem DECT Standard" eingeführt.

Die FIGUREN 1 bis 4 zeigen:
FIGUR 1 ein DECT-basiertes Mehrzellen-Kommunikationssystem,
FIGUR 2 Zeitschlitzbelegung bei konventioneller INTERN-Verbindung in dem DECT-basierten Mehrzellen-Kommunikationssystem,
FIGUR 3 Zeitschlitzbelegung bei einer DDC-Verbindung in dem DECT-basierten Mehrzellen-Kommunikationssystem,
FIGUR 4 ein Prinzipschaubild für die gemäß dem Stand der Technik bekannte Steuerung der Synchronisation in dem DECT-basierten Mehrzellen-Kommunikationssystem nach der FIGUR 1, in dem eine normale DECT-Verbindung [**"R**adio **F**ixed **P**art" (RFP) ↔ "**P**ortable **P**art" (PP)] mit einer "Distributed Communication" [**"Hy**brid **P**art" (HyP ↔ **"Hy**brid **P**art" (HyP)] verglichen wird.

FIGUR 1 zeigt ein mehrzellenbasiertes - ein so genanntes CMIbasiertes (**C**ordless **M**ulticell **I**ntegration) - DECT-Kommunikationssystem KS, bei dem ein "Single Cell"-basiertes DECT-System für den Heimbereich gemäß dem DECT-Standard durch die Ergänzung einer Zwischenstation oder Relaisstation, den so genannten Repeater (**C**ordless **R**adio **F**ixed **P**art, CRFP), zu einem CMI-basierten DECT-System erweitert worden ist. Das mehrzellige Kommunikationssystem KS weist eine erste Funkzelle FZ1 auf, die als Funkversorgungsbereich für eine DECT-Basisstation BS (**R**adio **F**ixed **P**art, RFP) dient und in der neben der Basisstation BS fünf Mobilteile MT1...MT5 (**P**ortable **P**art, PP) angeordnet sind, die allesamt funktechnisch mit der Basisstation BS verbunden sind. Die Basisstation BS, die zur Stromversorgung über ein Netzanschlussgerät NAG an ein Spannungsnetz SPN angeschlossen ist, ist entweder über eine Telekommunikationsanschlusseinheit TAE oder eine Nebenstellenanlage NStA mit dem Festnetz verbunden. Darüber hinaus ist an der Basisstation BS ein Telekommunikationsendgerät TKE angeschlossen, das vorzugsweise als Klingelanlage, Faxgerät, Personal Computer etc. ausgebildet sein kann.

Von den fünf Mobilteilen MT1...MT5 unterhält ein erstes Mobilteil MT1 über die Basisstation BS eine EXTERN-Verbindung EXV zu einem Extern-Teilnehmer im Festnetz, während ein zweites Mobilteil MT2 und ein drittes Mobilteil MT3 für eine systeminterne Kommunikation jeweils eine INTERN-Verbindung INV zur Basisstation BS unterhält. Neben dieser INTERN-Verbindung INV zwischen dem zweiten Mobilteil MT2 und dem dritten Mobilteil MT3 gibt es in der ersten Funkzelle FZ1 des Kommunikationssystems KS noch eine erste DIREKT-Verbindung DV1 zwischen einem vierten Mobilteil MT4 und einem fünften Mobilteil MT5.

Wegen dieser zusätzlichen Direktverbindungsmöglichkeit zwischen dem vierten Mobilteil MT4 und dem fünften Mobilteil MT5 (Distributed Communication) spricht man bei dem Kommunikationssystem KS gemäß dem DECT-Standard (vgl.: EN 300 175-5 V1.8.1, November 2004, Annex I) von einem "Distributed Communication DECT Local Network (DCDL-Net)". Die Teilnehmer eines "Distributed Communication DECT Local Network", die eine DIREKT-Verbindung aufbauen können, werden als "Member" bezeichnet und müssen die Fähigkeiten sowohl einer "Portable Termination (PT)" als auch einer "Fixed Termination (FT)" haben. Sie werden deshalb auch als Hybrid-Mobilteile bezeichnet, so dass das vierte Mobilteil MT4 ein erstes Hybrid-Mobilteil H-MT1 und das fünfte Mobilteil MT5 ein zweites Hybrid-Mobilteil H-MT2 ist. Die Rolle des "Master" in dem "Distributed Communication DECT Local Network" kann im Prinzip von jedem "DCDL-Net"-Terminal, also auch "Member" übernommen werden. Allerdings wird sie vorzugsweise, weil nahe liegend, durch die Basisstation des "Distributed Communication DECT Local Network" wahrgenommen.

Zusätzlich zu der ersten Funkzelle FZ1 weist das Kommunikationssystem KS im Zuge der Erweiterung von einem "Single Cell"-System zu einem "Multi-Cell"-System noch zwei weitere Funkzellen, eine zweite Funkzelle FZ2 und eine dritte Funkzelle FZ3 auf. In einem ersten Überlappungsbereich ÜLB1 zwischen der ersten Funkzelle FZ1 und der zweiten Funkzelle FZ2 und in einem zweiten Überlappungsbereich ÜLB2 zwischen der ersten Funkzelle FZ1 und der dritten Funkzelle FZ3 befinden sich als Zwischenstation oder Relaisstation ausgebildete Repeater, ein erster Repeater RP1 im ersten Überlappungsbereich ÜLB1 und ein zweiter Repeater RP2 im zweiten Überlappungsbereich ÜLB2. Beide Repeater RP1, RP2 sind als "Member" des Kommunikationssystems KS wie die als "Master" fungierende Basisstation BS in der ersten Funkzelle FZ1 über ein Netzanschlussgerät NAG an ein Spannungsnetz SPN angeschlossen. Der erste Repeater RP1 ist funktechnisch mit zwei weiteren Mobilteilen, einem sechsten Mobilteil MT6 und einem siebten Mobilteil MT7 verbunden, die sich beide außerhalb der ersten Funkzelle FZ1 in der zweiten Funkzelle FZ2 befinden. Zwischen dem sechsten Mobilteil MT6 und dem siebten Mobilteil MT7 besteht eine zweite DIREKT-Verbindung DV2, weshalb das sechste Mobilteil MT6 als drittes Hybrid-Mobilteil H-MT3 und das siebte Mobilteil MT7 als viertes Hybrid-Mobilteil H-MT4 bezeichnet wird.

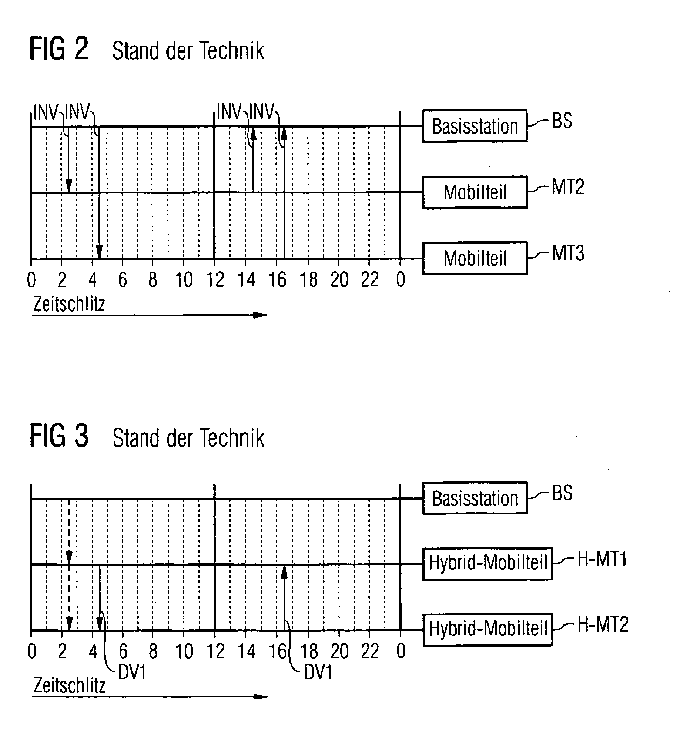

FIGUR 2 zeigt, wie die Ressource "Zeit" bei der INTERN-Verbindung INV als konventionelle Verbindungsmöglichkeit zwischen zwei Mobilteilen, hier z.B. das zweite Mobilteil MT2 und das dritte Mobilteil MT3, in dem DECT-basierten Mehrzellen-Kommunikationssystem KS belegt wird (Zeitschlitzbelegung).

Interne Verbindungen in DECT-basierten Kommunikationssystemen sind in der Regel so gelöst, dass beide Teilnehmer respektive beide Mobilteile eine Verbindung zur Basisstation haben, die die beiden Datenströme verbindet. Da bei einer INTERN-Verbindung durch die Basisstation mehr Bandbreite belegt wird, als für die Nutzdatenübertragung eigentlich nötig ist - es wird die doppelte Bandbreite belegt - und gleichzeitig die für die Basisstation zur Verfügung stehende Bandbreite begrenzt ist, erweist sich der Aufbau einer INTERN-Verbindung insbesondere dann als nachteilig, wenn interne Verbindungen mit höherem Datenaufkommen hergestellt werden sollen.

Zum Aufbau der INTERN-Verbindung INV zwischen den Mobilteilen MT2, MT3 in dem Kommunikationssystem KS nach der FIGUR 1 werden gemäß der FIGUR 2 z.B. folgende Zeitschlitze belegt: Für die Verbindung (Duplex-Verbindung) zwischen der Basisstation BS und dem zweiten Mobilteil MT2 werden die Zeitschlitze "2" und "14" verwendet, während für die Verbindung (Duplex-Verbindung) zwischen der Basisstation BS und dem dritten Mobilteil MT3 die Zeitschlitze "4" und "16" belegt werden.

FIGUR 3 zeigt, wie die Ressource "Zeit" bei den DIREKT-Verbindungen (Distributed Communications) DV1, DV2 als direkte, unmittelbare Verbindungsmöglichkeit zwischen zwei Hybrid-Mobilteilen, hier z.B. das erste Mobilteil H-MT1 und das zweite Mobilteil H-MT2 bzw. das dritte Mobilteil H-MT3 und das vierte Mobilteil H-MT4, in dem DECT-basierten Mehrzellen-Kommunikationssystem KS belegt wird (Zeitschlitzbelegung).

Für den Aufbau einer "Distributed Communication" muss mindestens das zu rufende Hybrid-Mobilteil ein "Idle Receiver Scanning" nach "Bearer-Request-Messages" durchführen, wie es in dem DECT-Standard (vgl.: EN 300 175-3, Absatz 11.8, November 2004) für Basisstationen beschrieben ist.

Da dieses "Idle Receiver Scanning" sehr energieaufwendig ist, werden Hybrid-Mobilteil das "Idle Receiver Scanning" in der Regel nicht permanent durchführen. Ein zu rufendes Hybrid-Mobilteil wird in einer nahe liegenden Ausführung ein "Idle Receiver Scanning" erst dann starten, wenn es auf anderem Wege dazu aufgefordert worden ist. Der DECT-Standard sieht dafür eine Prozedur "Indirect Link Establishment" vor (vgl.: EN 300 175-5, Absatz I.3.8, November 2004).

Alternativ kann auch eine konventionelle Intern-Verbindung dazu benutzt werden, den Aufbau einer "Distributed Communication" einzuleiten, also auch das "Idle Receiver Scanning" beim zu rufenden Hybrid-Mobilteil zu aktiveren. Diese Alternative ist bei bisherigen GIGASET-Schnurlostelefonen bevorzugt eingesetzt worden, um den Änderungsaufwand und Vorleistungen in der Basisstation der Telefone zu minimieren.

Für den weiteren Verbindungsaufbau einer "Distributed Communication" können dann die bekannten Regeln für einen "Connection- und Bearer-Setup" angewandt werden, wie sie in dem DECT-Standard (vgl.: EN 300 175-3, Kapitel 10.2 und 10.5, November 2004) beschrieben sind. Innerhalb dieser Prozeduren verhält sich das rufende Hybrid-Mobilteil wie ein gewöhnliches Mobilteil (Portable Part) und das gerufene Hybrid-Mobilteil wie eine Basisstation (Radio Fixed Part).

Die Zeitschlitzbelegung für die erste DIREKT-Verbindung DV1 zwischen dem ersten Mobilteil H-MT1 und dem zweiten Mobilteil H-MT2 in dem Kommunikationssystem KS gemäß der FIGUR 1 erfolgt entsprechend den vorstehenden Ausführungen gemäß der FIGUR 2 z.B. folgendermaßen:

Für die Übertragung der "Bearer-Request-Messages" von der Basisstation BS an das erste Hybrid-Mobilteil H-MT1 und/oder an das zweite Hybrid-Mobilteil H-MT2 wird der Zeitschlitz "2" verwendet, während für den "Connection- und Bearer-Setup" der DIREKT-Verbindung DV1 zwischen dem ersten Hybrid-Mobilteil H-MT1 und dem zweiten Hybrid-Mobilteil H-MT2 die Zeitschlitze "4" und "16" belegt werden.

Die Zeitschlitzbelegung für die zweite DIREKT-Verbindung DV2 zwischen dem dritten Mobilteil H-MT3 und dem vierten Mobilteil H-MT4 in dem Kommunikationssystem KS gemäß der FIGUR 1 erfolgt, wenngleich in der FIGUR 2 nicht dargestellt, im Prinzip analog, wobei der "Master" in diesem Fall nicht die Basisstation BS, sondern der erste Repeater RP1 ist.

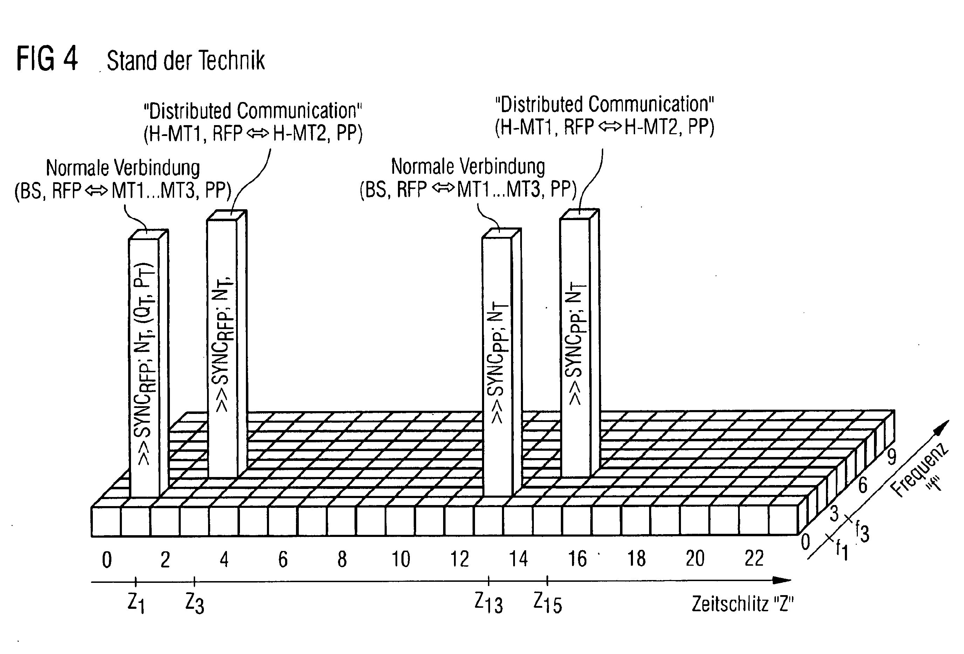

FIGUR 4 zeigt ein Prinzipschaubild für die gemäß dem Stand der Technik bekannte Steuerung der Synchronisation in dem DECT-basierten Mehrzellen-Kommunikationssystem KS nach der FIGUR 1. Bevor im Einzelnen auf die Synchronisationssteuerung eingegangen wird, vorab noch ein paar allgemeine, auf den DECT-Standard bezogene Bemerkungen zu der Synchronisationssteuerung im Zusammenhang mit der "Distributed Communication".

Die "Medium Access Control (MAC)-Layer"-Prozeduren für die "Distributed Communication" sind nicht in der ETSI-Publikation EN 300 175 beschrieben. Während einer aktiven "Distributed Communication" wird aber auch das Hybrid-Mobilteil, welches die Rolle der Basisstation als eine "**F**ixed **T**ermination (FT)" übernommen hat, im A-Feld den Zeitmultiplex für A-Feld-Nachrichten (T-MUX Messages) eines "**R**adio **F**ixed **P**art, RFP" einhalten müssen, wie er in EN 300 175-3, Kapitel 6.2.2.1.1 beschrieben ist. Offen ist aber, welche Broadcast-Kanäle (N_{T}, P_{T}, Q_{T}) dieses Hybrid-Mobilteil bedienen wird. Den N_{T}-Kanal wird das die Rolle des "Radio Fixed Part" übernehmende Hybrid-Mobilteil sicherlich bedienen müssen, um einen "**R**adio **F**ixed **P**art **I**dentity (RFPI)"-Handshake nach EN 300 175-3, Kapitel 11.5.1 zu erfüllen. Die Q_{T}- und P_{T}-Kanäle hingegen sind nicht zwingend erforderlich.

Somit stellt das die Rolle des "Radio Fixed Part" übernehmende Hybrid-Mobilteil während einer "Distributed Communication" einen "Continuous Downlink Broadcast Service" nach EN 300 175-3, Kapitel 5.7.1.1 bereit, der jedoch nicht vollständig ist, wenn die Q_{T}- oder P_{T}-Kanäle nicht bedient werden. Es ist aber zumindest sichergestellt, dass die Mobilteile N_{T}-Messages auf der Luft empfangen können und demnach versuchen werden, sich auf diesen "Continuous Broadcast Downlink Service" zu synchronisieren. Sollte der Q_{T}-Kanal jedoch nicht ausgesendet werden, wird jeder Versuch eines Mobilteils, sich zu synchronisieren, scheitern, weil dieses vergeblich auf zur Synchronisation nötige Q_{T}-Messages warten würde.

Im DECT-Standard EN 300 175-5, Kapitel I.2.1 und Kapitel I.2.3 ist außerdem beschreiben, dass der "Master" eines "Distributed Communication DECT Local Network (DCDL-Net)". dafür verantwortlich ist, permanent einen "Connectionless Bearer Service" bereitzustellen, mit dem der "Continuous Broadcast Downlink Service" zur Verfügung gestellt wird, so dass eine "Intra-Network" Synchronisation gewährleitet ist. Aus diesem Grund brauchen in Ruhe befindliche Hybrid-Mobilteile keinen eigenen "Continuous Broadcast Service" bereitzustellen und können sich darauf beschränken, auf den "Connectionless Bearer Service" des "Master" zu horchen.

Allerdings könnte dies zu der Situation führen, dass aktive Hybrid-Mobilteile während einer "Distributed Communication" einen "Continuous Broadcast Service" bereitstellen, auf den Mobilteile erfolglos versuchen könnten, sich zu synchronisieren.

Im gesamten DECT-Standard EN 300 175 sind im Zuge einer "DECT Distributed Communication" für dieses Problem weder Lösungen vorgesehen noch sind hierauf abzielende Implementierungen in der Praxis bekannt.

Das in der FIGUR 4 dargestellte Prinzipschaubild veranschaulicht wie aus der Sichtweise der scannenden Mobilteile MT1...-MT5 in der ersten Funkzelle FZ1 des Mehrzellen-Kommunikationssystems KS nach der FIGUR 1, die alle nach einem Signal von der Basisstation BS suchen, die Synchronisation der Mobilteile MT1...MT3 auf die Basisstation BS prinzipiell abläuft. Das dabei zur Verfügung stehende DECT-Spektrum besteht aus 24 Zeitschlitzen Z₀...Z₂₃ im TDD-Betrieb (z.B. Zeitschlitze Z₀...Z₁₁ für den Downlink und Zeitschlitze Z₁₂...Z₂₃ für den Uplink) und 10 Frequenzen f₀...f₉, wobei die Höhe eines Balkens in dem Prinzipschaubild der Feldstärke des Signals in einem Zeitschlitz und auf einer Frequenz entspricht. Die Beschriftung der Balken charakterisiert die für die bekannte Synchronisationssteuerung wesentlichen Eigenschaften und Inhalte bei der Übertragung.

So besteht auf einer Frequenz f₁ der Frequenzen f₀...f₉ in Zeitschlitzen Z₁ und Z₁₃ der Zeitschlitze Z₀...Z₂₃ eine normale Verbindung zwischen der Basisstation BS (Radio Fixed Part) und dem Mobilteil MT1...MT3 (Portable Part), während auf einer Frequenz f₃ der Frequenzen f₀...f₉ in Zeitschlitzen Z₃ und Z₁₅ der Zeitschlitze Z₀...Z₂₃ eine "Distributed Communication" zwischen dem ersten Hybrid-Mobilteil H-MT1 und dem zweiten Hybrid-Mobilteil H-MT2 existiert. Bei der "Distributed Communication" zwischen dem ersten Hybrid-Mobilteil H-MT1 und dem zweiten Hybrid-Mobilteil H-MT2 werden dem ersten Hybrid-Mobilteil H-MT1 die Rolle des "Radio Fixed Part" also des "Master" und dem zweiten Hybrid-Mobilteil H-MT2 die Rolle eines "Portable Part" also eines "Member" zuteil.

Im Vorfeld der normalen Verbindung zwischen der Basisstation BS und dem Mobilteil MT1...MT3, bei der die Basisstation BS N_{T}-Messages mit den darin gemäß dem DECT-Standard enthaltenen N_{T}-Datenpaketen und gegebenenfalls - wie bereits vorstehend erwähnt - auch noch Q_{T}-Messages mit den darin gemäß dem DECT-Standard enthaltenen Q_{T}-Datenpaketen und/oder P_{T}-Messages mit den darin gemäß dem DECT-Standard enthaltenen P_{T}-Datenpaketen sendet, sucht das Mobilteil MT1...MT3 nach den N_{T}-Messages der Basisstation BS mit den darin enthaltenen N_{T}-Datenpaketen. Die von der Basisstation BS in dem Zeitschlitz Z₁ auf der Frequenz f₁ gesendeten N_{T}-Messages mit den N_{T}-Datenpaketen sind jedoch nicht zu unterscheiden von den N_{T}-Messages mit N_{T}-Datenpaketen, die von dem ersten Hybrid-Mobilteil H-MT1, das in die Rolle des "Radio Fixed Part" also des "Master" schlüpft, in dem Zeitschlitz Z₃ auf der Frequenz f₃ gesendet werden. Natürlich werden sich die vorstehend erwähnten, im Zuge des RFPI-Handshake übertragenen **"R**adio **F**ixed **P**art **I**dentity (RFPI)-Werte der Basisstation BS und des ersten Hybrid-Mobilteil H-MT1 in den N_{T}-Datenpaketen der N_{T}-Messages unterscheiden. Dieses Unterscheidungskriterium liefert aber keine Aussage, ob es sich um einen echten "Radio Fixed Part" also eine Basisstation oder um ein Hybrid-Mobilteil handelt, das lediglich die Rolle eines "Radio Fixed Part" in einer "Distributed Communication" einnimmt und somit ein unechter "Radio Fixed Part" ist.

So kann nicht ausgeschlossen werden, dass das suchende Mobilteil MT1...MT3 sich für die Synchronisation mit einem "Radio Fixed Part" das in dem Zeitschlitz Z₃ und auf der Frequenz f₃ übertragene Signal mit den N_{T}-Messages etc. auswählt und demzufolge versuchen wird, sich auf dieses Signal zu synchronisieren. Da die in dem Zeitschlitz Z₃ und auf der Frequenz f₃ übertragenen N_{T}-Messages jedoch von einem unechten "Radio Fixed Part" gesendet worden sind, das keine weiteren Messages mehr senden wird, würde das Mobilteil MT1...MT3 vergeblich auf eine Q_{T}-Messages warten, die die nötigen Synchronisationsdaten enthält. Die Synchronisation mit dem "Radio Fixed Part" ist somit fehlgeschlagen. Die Folge hiervon ist, dass im - "best case"- das Warten auf die Q_{T}-Messages im Mobilteil MT1...MT3 zeitlich begrenzt ist und die Synchronisationsprozedur mit einem anderen geeigneten Signal fortgesetzt werden würde und im -"worst case"- das Mobilteil unendlich lange auf die Q_{T}-Messages wartet und somit unbrauchbar wird.

Die der Erfindung zugrunde liegende Aufgabe besteht darin, ein Verfahren zur Steuerung der Synchronisation in einem sich auf mindestens eine Zelle erstreckenden Kommunikationssystem zur drahtlosen Kommunikation mit synchronisiert zu einer Basisstation zellenbeschränkter und/oder -übergreifender, drahtloser Direkt-Kommunikationsmöglichkeit zwischen Mobilteilen anzugeben, bei dem verhindert wird, dass Mobilteile versuchen, sich in dem Kommunikationssystem auf einen von einem Hybrid-Mobilteil bereitgestellten "Continuous Broadcast Downlink Service" zu synchronisieren.

Diese Aufgabe wird durch die Verfahrensmerkmale des Patentanspruches 1 gelöst.

Die der Erfindung zugrunde liegende Idee besteht darin, in einem sich auf mindestens eine Zelle erstreckenden Kommunikationssystem zur drahtlosen Kommunikation mit synchronisiert zu einer Basisstation zellenbeschränkter und/oder -übergreifender, drahtloser Direkt-Kommunikationsmöglichkeit zwischen Mobilteilen einen "Continuous Broadcast Downlink Service" eines Hybrid-Mobilteil, das in die Rolle eines "Radio Fixed Part" schlüpft, so zu kennzeichnen, dass Mobilteile, die sich mit einem echten "Radio Fixed Part" synchronisieren möchten, erkennen können, dass der von dem Hybrid-Mobilteil bereitgestellte Service nicht permanent zur Verfügung steht oder nicht vollständig ist.

Dies lässt sich für ein DECT-Kommunikationssystem insbesondere auf unterschiedliche Art und Weise erreichen.

Eine erste Möglichkeit gemäß Anspruch 2 besteht darin, dass der "Continuous Broadcast Donwlink Service" des Hybrid-Mobilteils auch eine geeignete noch zu definierende P_{T}- oder Q_{T}-Message sendet, die anzeigt, dass dieser "Continuous Braodcast Downlink Service" von einem Fiybrid-Mobilteil in einer aktiven "Distributed Communication" stammt, nicht permanent zur Verfügung steht oder nicht vollständig ist, und daher von Mobilteilen auch nicht zur Synchronisation benutzt werden sollte.

Eine zweite Möglichkeit gemäß Ansprüchen 3 und 4 besteht darin, dass eine Abgrenzung/Unterscheidung im Synchronisationsfeld eines DECT-Paketes (Burst) herbeigeführt wird. Die DECT-Pakete enthalten gemäß der ETSI-Publikation EN 300 175-2, Kapitel 4.6 zu Beginn ein so genanntes Synchronisationsfeld. Es gibt zwei Bitmuster für dieses Synchronisationsfeld: Ein erstes Muster für Pakete von "Portable Parts" und ein zweites Muster für Pakete von "Radio Fixed Parts". Der konventionelle "Continuous Broadcast Downlink Service" einer Basisstation wird in Paketen übertragen, die das Synchronisationswort für RFP-basierte Übertragungen enthalten. Dagegen lassen sich die Pakete abgrenzen, die von einem Hybrid-Mobilteil in einer aktiven "Distributed Communication" in der Rolle des "Radio Fixed Part" gesendet werden, wenn diese entweder gemäß dem Anspruch 3 das Synchronisationswort für PP-basierte Übertragungen oder gemäß dem Anspruch 4 ein noch zu definierendes drittes Synchronisationswort enthalten.

Besonders vorteilhaft ist es, das Synchronisationswort für PP-basierte Übertragungen auch für Hybrid-Mobilteile in der RFP-Rolle einer "Distributed Communication" zu benutzen, weil verfügbare Integrierte Schaltkreise, sogenannte IC's, die Synchronisation möglicherweise nur für die zwei bisher bekannten Synchronisationspattern (für den "Portable Part" und für den "Portable Part") unterstützen. Außerdem ist es hierbei von Vorteil, dass Mobilteile ältere Produktgenerationen zur Auswahl eines echten "Continuous Broadcast Donwnlink Service" und zur Abgrenzung der Pakete eines Hybrid-Mobilteils in der RFP-Rolle keine neuen "Messages" oder Prozeduren unterstützen müssen.

Darüber hinaus ist diese Art der Kennzeichnung der Pakete eines Hybrid-Mobilteils, das in einer "Distributed Communication" aktiv ist, auch in jedem gesendeten Paket zu erkennen. Das ist besonders vorteilhaft, weil es in synchronisierten Mehrzellensystemen Scanning-Prozeduren (Mehrzellensuche) der Mobilteile nach einer für eine Verbindung am besten geeignete Basisstation gibt, bei der nur einzelne N_{T}-Pakete erfasst werden. In den N_{T}-Message-Inhalten lässt sich nach dem DECT-Standard keine weitere Information unterbringen. Eine Codierung in noch zu definierenden P_{T}- oder Q_{T}-Messages ist denkbar (Anspruch 2), würde aber bei einer Mehrzellensuche gegebenenfalls nicht erfasst. Auf diese Weise ist es möglich, den "Continuous Broadcast Downlink Service" von Hybrid-Mobilteilen für das synchrone RFP-Scanning von Mobilteilen in Mehrzellensystemen ("Mehrzellensuche") zu markieren.

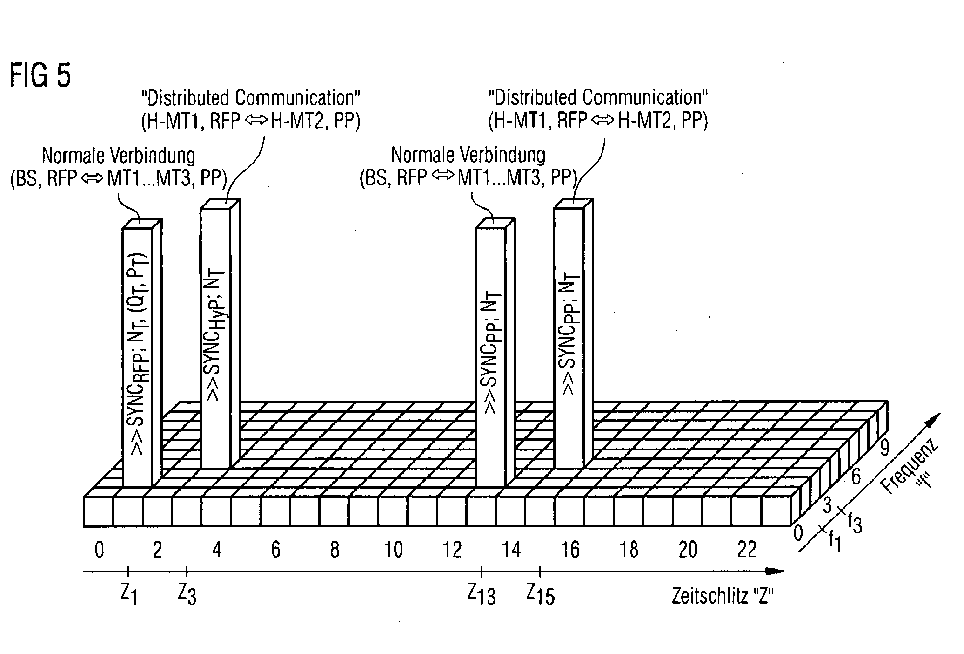

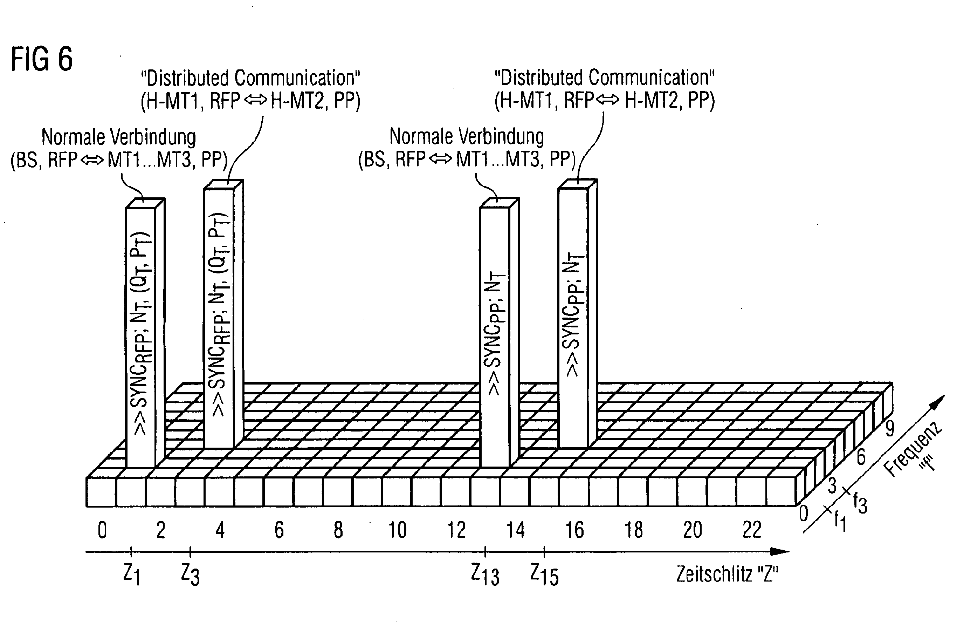

Zwei Ausführungsbeispiele der Erfindung werden anhand der FIGUREN 5 und 6 erläutert. Es zeigen:
FIGUREN 5 und 6 jeweils ein Prinzipschaubild für die erfindungsgemäße Steuerung der Synchronisation in dem DECT-basierten Mehrzellen-Kommunikationssystem nach der FIGUR 1.
FIGUR 5 zeigt eine erste Ausführungsform der Synchronisationssteuerung in dem DECT-basierten Mehrzellen-Kommunikationssystem nach der FIGUR 1, in dem eine normale DECT-Verbindung ["**R**adio **F**ixed **P**art" (RFP) ↔ "**P**ortable **P**art" (PP)] mit einer "Distributed Communication" [**"Hy**brid **P**art" (HyP ↔ **"Hy**brid **P**art" (HyP)] verglichen wird.

Das in der FIGUR 5 dargestellte Prinzipschaubild veranschaulicht zunächst wieder - wie in der FIGUR 4 - wie aus der Sichtweise der scannenden Mobilteile MT1...MT5 in der ersten Funkzelle FZ1 des Mehrzellen-Kommunikationssystems KS nach der FIGUR 1, die alle nach einem Signal von der Basisstation BS suchen, die Synchronisation der Mobilteile MT1...MT3 auf die Basisstation BS prinzipiell abläuft. Das dabei zur Verfügung stehende DECT-Spektrum besteht aus 24 Zeitschlitzen Z₀...Z₂₃ im TDD-Betrieb (z.B. Zeitschlitze Z₀...Z₁₁ für den Downlink und Zeitschlitze Z₁₂...Z₂₃ für den Uplink) und 10 Frequenzen f₀...f₉, wobei die Höhe eines Balkens in dem Prinzipschaubild der Feldstärke des Signals in einem Zeitschlitz und auf einer Frequenz entspricht. Die Beschriftung der Balken charakterisiert die für die bekannte Synchronisationssteuerung wesentlichen Eigenschaften und Inhalte bei der Übertragung.

So besteht auf einer Frequenz f₁ der Frequenzen f₀...f₉ in Zeitschlitzen Z₁ und Z₁₃ der Zeitschlitze Z₀...Z₂₃ eine normale Verbindung zwischen der Basisstation BS (Radio Fixed Part) und dem Mobilteil MT1...MT3 (Portable Part), während auf einer Frequenz f₃ der Frequenzen f₀...f₉ in Zeitschlitzen Z₃ und Z₁₅ der Zeitschlitze Z₀...Z₂₃ eine "Distributed Communication" zwischen dem ersten Hybrid-Mobilteil H-MT1 und dem zweiten Hybrid-Mobilteil H-MT2 existiert. Bei der "Distributed Communication" zwischen dem ersten Hybrid-Mobilteil H-MT1 und dem zweiten Hybrid-Mobilteil H-MT2 werden dem ersten Hybrid-Mobilteil H-MT1 die Rolle des "Radio Fixed Part" also des "Master" und dem zweiten Hybrid-Mobilteil H-MT2 die Rolle eines "Portable Part" also eines "Member" zuteil.

Im Vorfeld der normalen Verbindung zwischen der Basisstation BS und dem Mobilteil MT1...MT3, bei der die Basisstation BS N_{T}-Messages mit den darin gemäß dem DECT-Standard enthaltenen N_{T}-Datenpaketen und gegebenenfalls - wie bereits eingangs erwähnt - auch noch Q_{T}-Messages mit den darin gemäß dem DECT-Standard enthaltenen Q_{T}-Datenpaketen und/oder P_{T}-Messages mit den darin gemäß dem DECT-Standard enthaltenen P_{T}-Datenpaketen sendet, sucht das Mobilteil MT1...MT3 nach den N_{T}-Messages der Basisstation BS mit den darin enthaltenen N_{T}-Datenpaketen. Die von der Basisstation BS in dem Zeitschlitz Z₁ auf der Frequenz f₁ gesendeten N_{T}-Messages mit den N_{T}-Datenpaketen unterscheiden sich jedoch jetzt im Synchronisationsfeld von den N_{T}-Messages mit N_{T}-Datenpaketen, die von dem ersten Hybrid-Mobilteil H-MT1, das in die Rolle des "Radio Fixed Part" also des "Master" schlüpft, in dem Zeitschlitz Z₃ auf der Frequenz f₃ gesendet werden. So schickt die Basisstation BS ein Synchronisationswort SYNC_{RFP}, während das erste Hybrid-Mobilteil H-MT1 ein Synchronisationswort SYNC_{HyP} sendet. DECT-Datenpakete enthalten gemäß der ETSI-Publikation EN 300 175-2, Kapitel 4.6 zu Beginn ein so genanntes Synchronisationsfeld, das aus einer Präambel und einem Synchronisationswort besteht. Es gibt zwei Bitmuster für dieses Synchronisationsfeld: Ein erstes Muster für Pakete von "Portable Parts" und ein zweites Muster für Pakete von "Radio Fixed Parts".

Hieraus ergibt sich nun ein erster Ansatz, wie sich bei der "Distributed Communication" das Synchronisationswort SYNC_{RFP}, von dem Synchronisationswort SYNC_{HyP} unterscheiden könnte. So überträgt die Basisstation BS beim konventionellen "Continuous Broadcast Downlink Service" Datenpakete, die das Synchronisationswort für RFP-basierte Übertragungen, das Synchronisationswort SYNC_{RFP}, enthalten. Dagegen lassen sich die Datenpakete abgrenzen, die von dem ersten Hybrid-Mobilteil H-MT1 in einer aktiven "Distributed Communication" in der Rolle des "Radio Fixed Part" gesendet werden, wenn diese das Synchronisationswort für PP-basierte Übertragungen, das Synchronisationswort SYNC_{HyP}, enthalten.

Ein zweiter Ansatz könnte sein, dass das Synchronisationswort SYNC_{HyP} nicht das Synchronisationswort für PP-basierte Übertragungen ist, sondern zu diesem Zweck im DECT-Standard neben den Synchronisationswörten für RFP-basierte und PP-basierte Übertragungen ein weiteres, drittes, Synchronisationswort definiert wird.

Sofern die Basisstation BS das Synchronisationswort SYNC_{RFP} und das erste Hybrid-Mobilteil H-MT1 das Synchronisationswort SYNC_{HyP} gemäß den beiden vorstehend genannten Ansätzen sendet wird das scannende Mobilteil MT1...MT3 das im Zeitschlitz Z₃ auf der Frequenz f₃ gesendete Signal überhaupt nicht zur Synchronisation auswählen.

FIGUR 6 zeigt eine zweite Ausführungsform der Synchronisationssteuerung in dem DECT-basierten Mehrzellen-Kommunikationssystem nach der FIGUR 1, in dem eine normale DECT-Verbindung [**"R**adio **F**ixed **P**art" (RFP) ↔ **"P**ortable **P**art" (PP)] mit einer "Distributed Communication" [**"Hy**brid **P**art" (HyP ↔ "**Hy**brid **P**art" (HyP)] verglichen wird.

Das in der FIGUR 6 dargestellte Prinzipschaubild veranschaulicht zunächst wieder - wie in der FIGUR 4 - wie aus der Sichtweise der scannenden Mobilteile MT1...MT5 in der ersten Funkzelle FZ1 des Mehrzellen-Kommunikationssystems KS nach der FIGUR 1, die alle nach einem Signal von der Basisstation BS suchen, die Synchronisation der Mobilteile MT1...MT3 auf die Basisstation BS prinzipiell abläuft. Das dabei zur Verfügung stehende DECT-Spektrum besteht aus 24 Zeitschlitzen Z₀...Z₂₃ im TDD-Betrieb (z.B. Zeitschlitze Z₀...Z₁₁ für den Downlink und Zeitschlitze Z₁₂...Z₂₃ für den Uplink) und 10 Frequenzen f₀...f₉, wobei die Höhe eines Balkens in dem Prinzipschaubild der Feldstärke des Signals in einem Zeitschlitz und auf einer Frequenz entspricht. Die Beschriftung der Balken charakterisiert die für die bekannte Synchronisationssteuerung wesentlichen Eigenschaften und Inhalte bei der Übertragung.

So besteht auf einer Frequenz f₁ der Frequenzen f₀...f₉ in Zeitschlitzen Z₁ und Z₁₃ der Zeitschlitze Z₀...Z₂₃ eine normale Verbindung zwischen der Basisstation BS (Radio Fixed Part) und dem Mobilteil MT1...MT3 (Portable Part), während auf einer Frequenz f₃ der Frequenzen f₀...f₉ in Zeitschlitzen Z₃ und Z₁₅ der Zeitschlitze Z₀...Z₂₃ eine "Distributed Communication" zwischen dem ersten Hybrid-Mobilteil H-MT1 und dem zweiten Hybrid-Mobilteil H-MT2 existiert. Bei der "Distributed Communication" zwischen dem ersten Hybrid-Mobilteil H-MT1 und dem zweiten Hybrid-Mobilteil H-MT2 werden dem ersten Hybrid-Mobilteil H-MT1 die Rolle des "Radio Fixed Part" also des "Master" und dem zweiten Hybrid-Mobilteil H-MT2 die Rolle eines "Portable Part" also eines "Member" zuteil.

Im Vorfeld der normalen Verbindung zwischen der Basisstation BS und dem Mobilteil MT1...MT3, bei der die Basisstation BS N_{T}-Messages mit den darin gemäß dem DECT-Standard enthaltenen N_{T}-Datenpaketen und gegebenenfalls - wie bereits eingangs erwähnt - auch noch Q_{T}-Messages mit den darin gemäß dem DECT-Standard enthaltenen Q_{T}-Datenpaketen und/oder P_{T}-Messages mit den darin gemäß dem DECT-Standard enthaltenen P_{T}-Datenpaketen sendet, sucht das Mobilteil MT1...MT3 nach den N_{T}-Messages der Basisstation BS mit den darin enthaltenen N_{T}-Datenpaketen. Die von der Basisstation BS in dem Zeitschlitz Z₁ auf der Frequenz f₁ gesendeten N_{T}-Messages mit den N_{T}-Datenpaketen unterscheiden sich - wie in der FIGUR 4 - nicht von den N_{T}-Messages mit N_{T}-Datenpaketen, die von dem ersten Hybrid-Mobilteil H-MT1, das in die Rolle des "Radio Fixed Part" also des "Master" schlüpft, in dem Zeitschlitz Z₃ auf der Frequenz f₃ gesendet werden.

Allerdings sendet das erste Hybrid-Mobilteil H-MT1 gemäß dem Prinzipschaubild in dem Zeitschlitz Z₃ auf der Frequenz f₃ nicht nur N_{T}-Messages mit den N_{T}-Datenpakete sondern auch Q_{T}-Messages mit den Q_{T}-Datenpaketen und/oder P_{T}-Messages mit den P_{T}-Datenpaketen. In einer geeigneten Q_{T}- oder P_{T}-Message lässt sich die Information codieren, dass dieses Signal nicht von der Basisstation BS stammt, sondern von dem ersten Hybrid-Mobilteil H-MT1 in der Rolle des "Radio Fixed Part" bei der "Distributed Communication". Das scannende Mobilteil MT1...MT3 kann zwar auch hier wiederum das im Zeitschlitz Z₃ auf der Frequenz f₃ gesendete Signal auswählen, um sich darauf zu synchronisieren. Aber es wird im Rahmen der Synchronisationsprozedur die Q_{T}- oder P_{T}-Message empfangen, die anzeigt, dass es sich um das Signal des ersten Hybrid-Mobilteils H-MT1 handelt und nicht um die Basisstation BS. Infolgedessen wird es dann ein anderes Signal zur Synchronisation suchen.

## Patentansprüche

1. Verfahren zur Steuerung der Synchronisation in einem sich auf mindestens eine Zelle (FZ1, FZ2, FZ3) erstreckenden DECT-Kommunikationssystem (KS) zur drahtlosen Kommunikation mit synchronisiert zu einer Basisstation (BS) zellenbeschränkter und/oder -übergreifender, drahtloser Direkt-Kommunikationsmöglichkeit (DV1, DV2) zwischen Mobilteilen (H-MT1, H-MT2, H-MT3, H-MT4), ***dadurch gekennzeichnet, dass***
im Zuge der Direkt-Kommunikation zwischen den Mobilteilen (H-MT1, H-MT2, H-MT3, H-MT4) ein erstes Mobilteil (H-MT1, H-MT3), das zumindest temporär eine "Radio Fixed Part"-Funktion der Basisstation (BS) übernimmt, einen "Continuous Broadcast Downlink Service" bereitstellt und sich durch eine dabei übertragene Sonderinformation als ein Hybrid-Mobilteil zu er-kennen gibt, so dass Mobilteile (MT1...MT3, MT7), die sich unmittelbar oder mittelbar über einen Repeater (RP1) mit der Basisstation (BS) synchronisieren mochten, erkennen können, dass der von dem Hybrid-Mobilteil (H-MT1, H-MT3) bereitgestellte Service nicht permanent bereit gestellt wird oder nicht vollständig ist.

2. Verfahren nach Anspruch 2, **dadurch gekennzeichnet, dass**
die Sonderinformation in einer P_{T}- oder Q_{T}-Message gemäß DECT-Standard enthalten ist.

3. Verfahren nach Anspruch 2, **dadurch gekennzeichnet, dass**
die Sonderinformation das in DECT-Standard definierte "Portable Part"-Synchronisationswort des Synchronisationsfeldes ist.

4. Verfahren nach Anspruch 2, **dadurch gekennzeichnet, dass**
die Sonderinformation neben dem "Portable Part"-Synchronisationswort und dem "Radio Fixed Part"-Synchronisationswort für Hybrid-Mobilteile ein weiteres Synchronisationswort des Synchronisationsfeldes ist.

## Claims

1. Method for controlling the synchronization in a DECT communication system (KS), which extends to at least one cell (FZ1, FZ2, FZ3), for the purpose of wireless communication between mobile parts (H-MT1, H-MT2, H-MT3, H-MT4) using a wireless direct communication facility (DV1, DV2) which is cell-restricted and/or cross-cell in sync with a base station (BS),
**characterized in that**
in the course of the direct communication between the mobile parts (H-MT1, H-MT2, H-MT3, H-MT4) a first mobile part (H-MT1, H-MT3), which at least temporarily undertakes a "Radio Fixed Part" function at the base station (BS), provides a "Continuous Broadcast Downlink Service" and identifies itself as a hybrid mobile part by means of a piece of special information transmitted in the process, so that mobile parts (MT1, MT3, MT7) which want to synchronize themselves with the base station (BS) directly or indirectly via a repeater (RP1) are able to recognize that the service provided by the hybrid mobile part (H-MT1, H-MT3) is not being provided permanently or is not complete.

2. Method according to Claim 2, **characterized in that** the special information is contained in a P_{T} or Q_{T} message based on the DECT standard.

3. Method according to Claim 2, **characterized in that** the special information is the "Portable Part" synchronization word of the synchronization field, as defined in the DECT standard.

4. Method according to Claim 2, **characterized in that** the special information is a further synchronization word of the synchronization field besides the "Portable Part" synchronization word and the "Radio Fixed Part" synchronization word for hybrid mobile parts.

## Revendications

1. Procédé de commande de la synchronisation dans un système de communication DECT (KS) s'étendant sur au moins une cellule (FZ1, FZ2, FZ3) en vue de la communication sans fil avec possibilité de communication directe (DV1, DV2), sans fil, de manière synchronisée avec une station dé base (BS), en restant à l'intérieur de la cellule et/ou en allant au-delà, entre des parties mobiles (H-MT1, H-MT2, H-MT3, H-MT4),
**caractérisé en ce que,**
au cours de la communication directe entre les parties mobiles (H-MT1, H-MT2, H-MT3, H-MT4), une première partie mobile (H-MT1, H-MT3) qui se charge au moins temporairement d'une fonction « Partie Fixe Radio » de la station de base (BS) fournit un « Service de Liaison descendante à Émission Continue » et se fait connaître comme partie mobile hybride par une information spéciale transmise alors de telle sorte que des parties mobiles (MT1 à MT3, MT7) qui souhaitent se synchroniser avec la station de base (BS) directement ou indirectement par l'intermédiaire d'un répéteur (RP1) peuvent reconnaître que le service fourni par la partie mobile hybride (H-MT1, H-MT3) n'est pas fourni en permanence ou n'est pas complet.

2. Procédé selon la revendication 1, **caractérisé en ce que** l'information spéciale est contenue dans un message P_{T} ou Q_{T} selon le standard DECT.

3. Procédé selon la revendication 2, **caractérisé en ce que** l'information spéciale est le mot de synchronisation « Partie Mobile », défini dans le standard DECT, du champ de synchronisation.

4. Procédé selon la revendication 2, **caractérisé en ce que**, outre le mot de synchronisation « Partie Mobile » et le mot de synchronisation « Partie Fixe
Radio » pour des parties mobiles hybrides, l'information spéciale est un autre mot de synchronisation du champ de synchronisation.
